# EUROPÄISCHE PATENTSCHRIFT

(11) **EP 1 592 034 B1**
(45) Veröffentlichungstag und Bekanntmachung des Hinweises auf die Patenterteilung: **12.06.2013**
(21) Anmeldenummer: 05007870.8
(22) Anmeldetag: 11.04.2005
(51) Int. Cl.: H01H 9/08, H02B 1/044

(54) **Drehschalter**
Rotating switch
Interrupteur rotatif.

(30) Priorität: 28.04.2004 DE 202004006783 U
(43) Veröffentlichungstag der Anmeldung: 02.11.2005
(73) Patentinhaber: TRW Automotive Electronics & Components GmbH, 78315 Radolfzell (DE)
(72) Erfinder: Altmann, Markus, 78345 Moos-Bankholzen (DE); Wohlfahrt, Karl-Heinz, 78351 Bodman-Ludwigshafen (DE)
(74) Vertreter: Prinz & Partner

(56) Entgegenhaltungen:
- EP-A- 0 726 629
- DE-C1- 4 409 460
- US-A- 5 631 454

## Beschreibung

Die Erfindung betrifft einen Drehschalter für den Einbau in der Armaturentafel eines Fahrzeugs, mit einem Schaltergehäuse, einer in dem Schaltergehäuse drehbar angeordneten Betätigungswelle, einem Drehknopf, der auf ein Ende der Betätigungswelle aufgesetzt ist, und einer ringförmigen Blende, die den Drehknopf umgibt und am Schaltergehäuse lösbar befestigt ist.

In Kraftfahrzeugen sind Drehschalter für die Funktionen Standlicht, Abblendlicht, Nebellicht und Nebelschlusslicht weit verbreitet. Zusätzliche Schaltstellungen können für Parklicht und für eine Automatikfunktion vorgesehen sein. Diese Drehschalter werden in einer Aufnahmeöffnung der Armaturentafel des Fahrzeugs eingebaut. Im Reparaturfall soll der Drehschalter zerstörungsfrei aus der Armaturentafel ausgebaut werden können. Bei einer bekannten Ausführung eines Drehschalters sind am zylindrischen Teil des Schaltergehäuses diametral einander gegenüberliegend zwei Schieber vorgesehen, die radial ein- und ausgefahren werden können. In der eingefahrenen Position der Schieber läßt sich das Schaltergehäuse in die Aufnahmeöffnung der Armaturentafel einschieben. In der ausgefahrenen Stellung der Schieber hintergreifen diese die innenseitige Berandung der Aufnahmeöffnung in der Armaturentafel, wodurch das Schaltergehäuse axial an der Armaturentafel gesichert ist. In der entgegengesetzten Axialrichtung liegt eine ringförmige Blende, die mit dem Schaltergehäuse verrastet ist und den Drehknopf umgibt, an einer vertieften Schulter der Armaturentafel auf. Die Betätigung der Schieber erfolgt durch Einstellen des Drehknopfes in eine bestimmte Drehstellung, axiale Verschiebung des Drehknopfes in Richtung des Schaltergehäuses unter Druck- oder Zugeinwirkung und gleichzeitige Drehung des Drehknopfes entgegen der Wirkung von Rückstellfedern. Die Schieber stehen nun nicht mehr radial über den Umfang des Schaltergehäuses hinaus, so daß dieses aus der Einbauöffnung herausgezogen werden kann. Da die Schieber jedoch nur als Anschläge in Axialrichtung wirksam sind, ist ein fester Sitz des Schaltergehäuses in der Einbauöffnung der Armaturentafel nicht gegeben.

Das Dokument EP 0 726 629 A2 beschreibt einen Drehschalter zum Einbau in die Armaturentafel eines Kraftfahrzeugs.

Durch die Erfindung wird ein Drehschalter zur Verfügung gestellt, bei dem das Schaltergehäuse einfach, schnell und sicher in der Einbauöffnung der Armaturentafel befestigt und ebenso einfach wieder gelöst werden kann. Vorzugsweise erfolgt die Montage und Demontage ohne besonderes Werkzeug.

Der erfindungsgemäße Drehschalter für den Einbau in der Armaturentafel eines Fahrzeugs hat ein Schaltergehäuse, eine in dem Schaltergehäuse drehbar angeordnete Betätigungswelle, einen Drehknopf, der auf ein Ende der Betätigungswelle aufgesetzt ist, und eine ringförmige Blende, die den Drehknopf umgibt und am Schaltergehäuse lösbar befestigt ist. Die Blende ist mit dem Schaltergehäuse durch einen Rastmechanismus verbunden. Dieser Rastmechanismus ist durch Relativdrehung zwischen Blende und Schaltergehäuse lösbar. Der Drehknopf ist in einer bestimmten Drehstellung axial verschiebbar und wird durch diese axiale Verschiebung mit der Blende drehfest gekoppelt. Zur Lösung der Blende vom Schaltergehäuse wird der Drehknopf in die bestimmte Drehstellung bewegt und dann axial verschoben sowie gleichzeitig gedreht, wobei die Blende mitgedreht und die Rastverbindung zwischen Blende und Schaltergehäuse gelöst wird. Nachdem die Blende vom Schaltergehäuse gelöst und entfernt ist, wird der Innenraum des Schaltergehäuses zugänglich. Von dort aus kann nun auf die Befestigung zwischen Schaltergehäuse und Einbauöffnung der Armaturentafel eingewirkt werden, um das Schaltergehäuse aus der Einbauöffnung zu lösen. Vorzugsweise erfolgt die Befestigung des Schaltergehäuses in der Einbauöffnung der Armaturentafel durch Rastelemente, also formschlüssig, wobei die Rastelemente von der Stirnseite des Schaltergehäuses her zugänglich sind, um sie bei Bedarf aus dem Rasteingriff zu lösen, woraufhin das Schaltergehäuse aus der Einbauöffnung der Armaturentafel herausgezogen werden kann. Zur Befestigung des Schaltergehäuses in der Einbauöffnung der Armaturentafel wird dieses lediglich eingeschoben, bis sein Umfangsrand an einer vertieften Schulter der Einbauöffnung der Armaturentafel aufliegt, woraufhin die Rastelemente selbsttätig an der Armaturentafel einrasten.

Die drehfeste Kopplung zwischen Drehknopf und Blende erfolgt bei der bevorzugten Ausführungsform durch einen radial abstehenden Nocken am Drehknopf oder an der Blende und durch eine entsprechende axiale Nut an der Blende oder an dem Drehknopf. Der Nocken greift nur in einer bestimmten Drehposition und nur in der axial verschobenen Position des Drehknopfes in die axiale Nut ein. In allen anderen Drehpositionen verhindert der radial abstehende Nocken die axiale Verschiebung des Drehkopfes.

Der Rastmechanismus ist vorzugsweise ein Bajonettmechanismus. Dazu sind in der Umfangswand der Blende axial ansteigende Schlitze gebildet, und entsprechende radial abstehende Stifte sind am Außenumfang des Schaltergehäuses angeordnet.

Weitere Merkmale und Vorteile der Erfindung ergeben sich aus der folgenden Beschreibung einer bevorzugten Ausführungsform und aus den beigefügten Zeichnungen. In den Zeichnungen zeigen:
- Figur 1 eine Frontansicht eines Drehschalters für den Einbau in einer Armaturentafel eines Fahrzeugs;
- Figur 2 eine auseinandergezogene Perspektivdarstellung der Bestandteile des Drehschalters;
- Figur 3 eine Skizze zur Veranschaulichung der Einbausituation des Drehschalters in einer Armaturentafel;
- Figur 4 eine perspektivische Darstellung einer Blende des Drehschalters mit Drehknopf in Blickrichtung schräg von unten;
- Figur 5 eine Teilansicht analog Figur 4, jedoch in einer veränderten relativen Drehstellung von Blende und Drehknopf;
- Figur 6 eine weitere perspektivische Teilansicht analog Figur 4, jedoch in einer anderen relativen Dreh- und Axialstellung zwischen Blende und Drehknopf; und
- Figur 7 eine perspektivische Teilansicht des Drehknopfs mit Teilen des Schaltermechanismus.

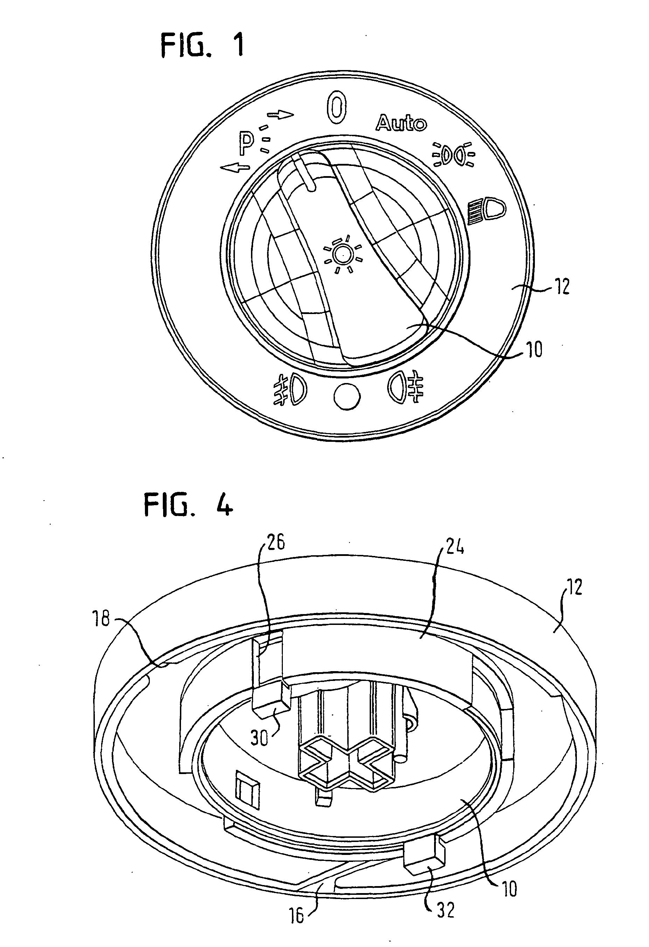

Bei der Darstellung in Figur 1 sind von einem Drehschalter ein zentraler Drehkopf 10 und eine diesen umgebende, ringförmige Blende 12 zu erkennen. Der Drehknopf 10 ist mit einem länglichen, profilierten Griffteil versehen. Die Blende 12 trägt Symbole, welche die verschieden Schalterpositionen signalisieren. Die in Figur 1 dargestellte Drehstellung des Drehknopfes 10 ist durch ein Symbol P (Parklicht) und durch einen nach rechts weisenden Pfeil markiert.

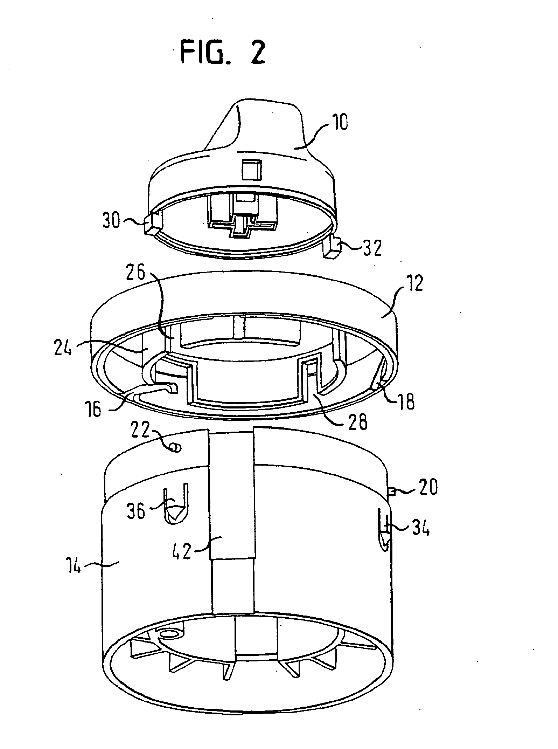

Wie aus Figur 2 ersichtlich, besteht der Drehschalter aus einem Schaltergehäuse 14, der Blende 12 und dem Drehknopf 10. Die Blende 12 ist mittels einer Rastvorrichtung an dem Schaltergehäuse 14 befestigt. Diese Rastvorrichtung ist von der Art eines Bajonettverschlusses und weist zwei axial ansteigende Schlitze 16, 18 in der Außenumfangswand der Blende 12 sowie zwei entsprechende Stifte 20, 22 am Außenumfang des Schaltergehäuses 14 auf.

Die Blende 12 hat eine Innenumfangswand 24, die zwei axiale Schlitze 26, 28 (hier einander diametral gegenüberliegend) aufweist. Der Drehknopf 10 trägt zwei radial abstehen Nocken 30, 32, die ebenfalls einander axial gegenüberliegend angeordnet sind.

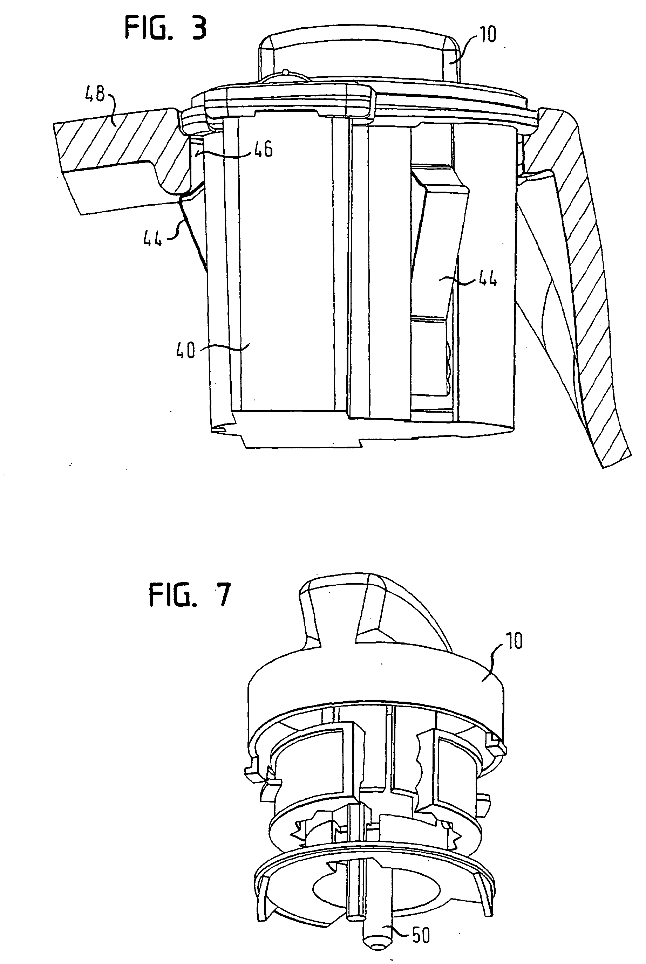

Am Außenumfang des Schaltergehäuses 14 sind Rastzungen 34, 36 gebildet. Mittels dieser Rastzungen 34, 36 wird das Schaltergehäuse 14 in der Aufnahmeöffhung eines topfartigen Trägergehäuses 40 verrastet, das in Figur 3 dargestellt ist. In axiale Nuten 42 am Außenumfang des Schaltergehäuses sind Rastfedern 44 eingesetzt, die durch Schlitze im Trägergehäuse 40 radial hindurchtreten. Wie in Fig. 3 dargestellt, wird das Trägergehäuse 40 mit dem darin aufgenommenen Schaltergehäuse 14 sowie optional mit anderen Funktionseinheiten (Drehregler, Taster ...) in eine Einbauöffnung 46 eines Armaturenträgers 48 eingesetzt. Dabei hintergreifen die Rastnasen an den Rastfedern 44 die innenliegende Umfangskante der Einbauöffnung 46, wodurch das Trägergehäuse 40 mit dem Drehschalter und optional weiteren Funktionseinheiten axial am Armaturenträger 48 gesichert wird.

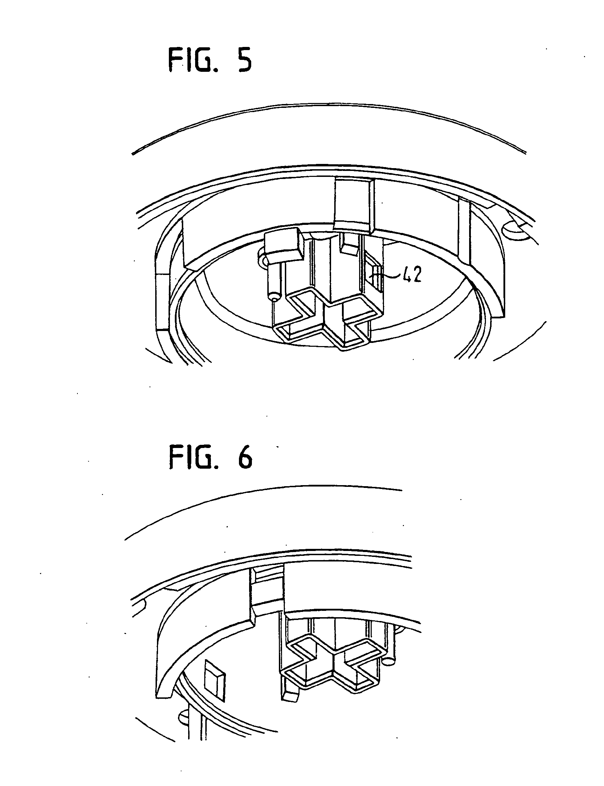

Die Darstellungen in den Figuren 4, 5 und 6 dienen zur Erläuterung der Funktionsweise beim Lösen der Blende 12 von dem Schaltergehäuse 14. Im Zustand der Figuren 4 und 5 ist die Blende 12 noch mit dem Schaltergehäuse 14 gekoppelt, das in der Zeichnung nicht dargestellt ist, um den Blick unter die Blende und den Drehknopf freizugeben. Die in Figur 4 dargestellt Relativstellung zwischen Blende 12 und Drehknopf 10 entspricht der in Figur 1 dargestellten Drehstellung. In dieser Drehstellung fluchten die radial abstehenden Nocken 30, 32 des Drehknopfes 10 axial mit den entsprechenden Schlitzen 26, 28 der Innenumfangswand 24 der Blende 12. In allen anderen relativen Drehstellungen zwischen Drehknopf 10 und Blende 12 greifen die Nocken 30, 32 hinter die freie Stirnkante der Innenumfangswand 24, wie in Figur 5 gezeigt, wodurch Drehknopf 10 an einer Axialbewegung gehindert wird.

Wird nun bei der in Figur 4 gezeigten Drehstellung der Drehknopf 10 axial in Richtung vom Schaltergehäuse 14 fort bewegt, indem Zug ausgeübt wird, so treten die Nocken 30, 32 in die entsprechenden axialen Schlitze 26, 28 ein, wobei der Drehknopf drehfest mit der Blende 12 gekoppelt wird. Der Drehknopf 10 kann nun im Uhrzeigersinn gedreht werden, wobei die Blende 12 mitgedreht wird. Dadurch wird die Rastverbindung zwischen der Blende 12 und dem Schaltergehäuse 14 gelöst. Die Blende 12 kann nun von dem Schaltergehäuse 14 abgehoben werden. Nachdem die Blende 12 von dem Schaltergehäuse 14 gelöst ist, werden die Rastfedern 44 am Umfang des Schaltergehäuses 14 von dessen Stirnseite her zugänglich. Durch radiales Eindrücken der Rastfedern 44 werden deren Rastnasen außer Eingriff mit der Einbauöffnung 46 in der Armaturentafel 48 gebracht, so daß es leicht möglich ist, das Trägergehäuse 40 mit dem Schaltergehäuse 14 aus der Armaturentafel 48 herauszuziehen.

Die Fig. 7 zeigt Einzelheiten des mit dem Drehknopf 10 betätigten Schaltmechanismus, wobei insbesondere die Betätigungswelle 50 zu sehen ist, die mit dem Drehknopf drehfest gekoppelt und durch Rastelemente verbunden ist.

## Patentansprüche

1. Drehschalter für den Einbau in der Armaturentafel (48) eines Fahrzeugs, mit einem Schaltergehäuse (14), einer in dem Schaltergehäuse drehbar angeordneten Betätigungswelle (50), einem Drehknopf (10), der auf ein Ende der Betätigungswelle aufgesetzt ist und einer ringförmigen Blende (12), die den Drehknopf umgibt und am Schaltergehäuse lösbar befestigt ist, **dadurch gekennzeichnet, daß** die Blende mit dem Schaltergehäuse durch einen Rastmechanismus verbunden ist, der durch Relativdrehung zwischen Blende und Schaltergehäuse lösbar ist, und daß der Drehknopf in einer bestimmten Drehstellung axial verschiebbar und dadurch mit der Blende drehfest koppelbar ist.

2. Drehschalter nach Anspruch 1, **dadurch gekennzeichnet, daß** der Drehknopf und die Blende durch wenigstens einen radial abstehenden Nocken (30,32) am Drehknopf oder an der Blende und durch eine entsprechende axiale Nut an der Blende oder an dem Drehknopf drehfest koppelbar sind, wobei der Nocken nur in der axial verschobenen Position in die axiale Nut eingreift.

3. Drehschalter nach Anspruch 1 oder 2, **dadurch gekennzeichnet, daß** der Rastmechanismus ein Bajonettmechanismus ist.

4. Drehschalter nach Anspruch 3, **dadurch gekennzeichnet, daß** der Bajonettmechanismus mehrere in einer Umfangswand der Blende gebildete, axial ansteigende Schlitze (16,18) und entsprechende radial abstehende Stifte (20,22) am Außenumfang des Schaltergehäuses umfaßt.

5. Drehschalter nach den Ansprüchen 2 bis 4, **dadurch gekennzeichnet, daß** die axiale Nut in einer Innenumfangswand (24) der Blende gebildet und der Nocken am Drehknopf radial nach außen vorspringend angeordnet ist.

6. Drehschalter nach einem der vorstehenden Ansprüche, **dadurch gekennzeichnet, daß** am Außenumfang des Schaltergehäuses Rastelemente zur Verrastung an einer Einbauöffnung der Armaturentafel angeordnet sind.

7. Drehschalter nach Anspruch 6, **dadurch gekennzeichnet, daß** die Rastelemente bei abgenommener Blende von der Stirnseite des Schaltergehäuses her zugänglich sind.

8. Drehschalter nach einem der vorstehenden Ansprüche, **dadurch gekennzeichnet, daß** die axiale Verschiebung zur drehfesten Kopplung des Drehknopfes in Richtung vom Schaltergehäuse fort unter Zugeinwirkung erfolgt.

9. Drehschalter nach einem der Ansprüche 5 bis 8, **dadurch gekennzeichnet, daß** der radial vorstehende Nocken in allen Drehstellungen des Drehknopfes außer der bestimmten Drehstellung die freie Stirnfläche der Innenumfangswand hintergreift.

10. Drehschalter nach einem der Ansprüche 6 bis 9, **dadurch gekennzeichnet, dass** das Schaltergehäuse mit weiteren optionalen Funktionseinheiten in ein topfartiges Trägergehäuse (40) eingesetzt ist, das seinerseits in die Einbauöffnung (46) des Armaturenträgers (48) eingesetzt ist, und daß die Rastelemente das Trägergehäuse radial durchragen und es in der Einbauöffnung sichern.

## Claims

1. A rotary switch for installation in the dashboard (48) of a vehicle, comprising a switch housing (14), an actuation shaft (50) that is rotatably arranged in the switch housing, a rotary knob (10) that is mounted on one end of the actuation shaft, and a ring-shaped faceplate (12) that surrounds the rotary knob and that is detachably fastened to the switch housing, **characterized in that** the faceplate is connected to the switch housing by a latching mechanism that can be released by a relative rotation between the faceplate and the switch housing, and **in that** the rotary knob can be moved axially in a specific rotational position and can thereby be coupled to the faceplate for joint rotation.

2. The rotary switch according to claim 1, **characterized in that** the rotary knob and the faceplate can be coupled for joint rotation by at least one radially projecting cam (30, 32) on the rotary knob or on the faceplate and by a corresponding axial groove on the faceplate or on the rotary knob, the cam engaging into the axial groove only in the axially shifted position.

3. The rotary switch according to claim 1 or 2, **characterized in that** the latching mechanism is a bayonet mechanism.

4. The rotary switch according to claim 3, **characterized in that** the bayonet mechanism comprises a plurality of axially ascending slits (16, 18) formed in a circumferential wall of the faceplate and corresponding radially projecting pins (20, 22) on the outer circumference of the switch housing.

5. The rotary switch according to claims 2 to 4, **characterized in that** the axial groove is formed in an inner circumferential wall (24) of the faceplate and the cam is arranged on the rotary knob so as to project radially outwards.

6. The rotary switch according to any of the preceding claims, **characterized in that** latching elements for latching to an installation opening of the dashboard are arranged on the outer circumference of the switch housing.

7. The rotary switch according to claim 6, **characterized in that** the latching elements are accessible from the front of the switch housing when the faceplate has been removed.

8. The rotary switch according to any of the preceding claims, **characterized in that** the axial shift for the coupling of the rotary knob for joint rotation is effected in the direction away from the switch housing with a pulling action.

9. The rotary switch according to any of claims 5 to 8, **characterized in that**, in all rotational positions of the rotary knob except for the specific rotational position, the radially projecting cam engages behind the free front face of the inner circumferential wall.

10. The rotary switch according to any of claims 6 to 9, **characterized in that** the switch housing, along with further optional functional units, is inserted in a pot-like support housing (40) which, in turn, is inserted in the installation opening (46) of the dashboard (48), and **in that** the latching elements protrude radially through the support housing, securing it in the installation opening.

## Revendications

1. Commutateur rotatif pour le montage dans le tableau de bord (48) d'un véhicule, comportant un boîtier de commutateur (14), un arbre d'actionnement (50) agencé mobile en rotation dans le boîtier de commutateur, un bouton rotatif (10) agencé sur une extrémité de l'arbre d'actionnement, et un cache (12) annulaire qui entoure le bouton rotatif et est fixé de manière détachable sur le boîtier de commutateur, **caractérisé en ce que** le cache est raccordé au boîtier de commutateur au moyen d'un mécanisme par enclenchement qui peut être libéré par une rotation relative entre le cache et le boîtier de commutateur, et **en ce que** dans une position de rotation déterminée, le bouton rotatif est axialement déplaçable et est ainsi apte à être relié au cache de manière solidaire en rotation.

2. Commutateur rotatif selon la revendication 1, **caractérisé en ce que** le bouton rotatif et le cache sont aptes à être reliés de manière solidaire en rotation au moyen d'au moins un ergot (30, 32) radialement en saillie sur le bouton rotatif ou sur le cache, et d'une gorge axiale correspondante sur le cache ou sur le bouton rotatif, l'ergot s'engageant dans la gorge axiale uniquement dans la position axialement déplacée.

3. Commutateur rotatif selon la revendication 1 ou 2, **caractérisé en ce que** le mécanisme par enclenchement est un mécanisme à baïonnette.

4. Commutateur rotatif selon la revendication 3, **caractérisé en ce que** le mécanisme à baïonnette comprend plusieurs fentes (16, 18) montant axialement qui sont réalisées dans la paroi périphérique du cache, et des pions (20, 22) correspondants radialement en saillie sur la périphérie extérieure du boîtier de commutateur.

5. Commutateur rotatif selon les revendications 2 à 4, **caractérisé en ce que** la gorge axiale est réalisée dans une paroi périphérique intérieure (24) du cache et **en ce que** l'ergot est agencé sur le bouton rotatif radialement en saillie vers l'extérieur.

6. Commutateur rotatif selon l'une des revendications précédentes, **caractérisé en ce que** des éléments d'enclenchement pour l'enclenchement dans un orifice de montage du tableau de bord sont agencés sur la périphérie extérieure du boîtier de commutateur.

7. Commutateur rotatif selon la revendication 6, **caractérisé en ce que** les éléments d'enclenchement sont accessibles depuis la face frontale du boîtier de commutateur lorsque le cache est retiré.

8. Commutateur rotatif selon l'une des revendications précédentes, **caractérisé en ce que** le déplacement axial pour la liaison solidaire en rotation du bouton rotatif est réalisé dans un sens en éloignement du boîtier de commutateur sous un effet de traction.

9. Commutateur rotatif selon l'une des revendications 5 à 8, **caractérisé en ce que** l'ergot radialement en saillie s'engage derrière la face frontale libre de la paroi périphérique intérieure dans chaque position de rotation du bouton rotatif à l'exception de la position de rotation déterminée.

10. Commutateur rotatif selon l'une des revendications 6 à 9, **caractérisé en ce que** le boîtier de commutateur est inséré avec d'autres unités fonctionnelles optionnelles dans un boîtier support (40) en forme de pot qui est pour sa part inséré dans l'orifice de montage (46) du tableau de bord (48), et **en ce que** les éléments d'enclenchement passent radialement à travers le boîtier support et le fixent dans l'orifice de montage.
